# EUROPEAN PATENT APPLICATION

(11) **EP 3 367 352 A1**
(43) Date of publication of application: **29.08.2018**
(21) Application number: 18156069.9
(22) Date of filing: 09.02.2018
(51) Int. Cl.: G07G 1/00, G06Q 20/20, G06Q 20/40

(54) **THEFT DETECTION MACHINE**

(30) Priority: 22.02.2017 JP 2017030618
(71) Applicant: Toshiba TEC Kabushiki Kaisha, Tokyo 141-8562 (JP)
(72) Inventor: YOKOYAMA, Yukiko, Shinagawa-ku,, Tokyo 141-8562 (JP)
(74) Representative: Takeuchi, Maya

(57) **Abstract**

A theft detection machine connectable to a register machine and a checkout machine that are located in a point-of-sale (POS) area of a store. The theft detection machine includes a storage device in which feature data of each customer included in a first image captured during a transaction carried out at the register machine, are stored, an audio output device, and a controller configured to extract feature data from second images that include customers leaving the exit of the POS area of the store, and upon determining that at least two person are captured in the first image and the transaction has not been settled at the checkout machine, compare the feature data of each customer included in the first image and the feature data extracted from the second images and control the audio output device to sound an alert based on a result of the comparison.

## Description

### FIELD

The present invention relates to the field of image processing technologies in general, and embodiments described herein relate in particular to an information processing apparatus and a method for monitoring customers in a checkout area.

### BACKGROUND

Conventionally, in a retail store such as a supermarket, a store clerk operates a POS (Point Of Sale) terminal to execute registration and checkout of commodities. A checkout system of a semi-self-service type in which the store clerk executes the registration of a commodity and a customer executes the checkout of the commodity, and a checkout system of a self-service type in which the customer executes both the registration and the checkout of the commodity are known.

In the semi-self-service type and the self-service type, the checkout of the commodity is left to the customer. Therefore, there is a possibility that a customer might engage in an activity known as "shoplifting" in which a customer goes out of the retail store with a commodity without paying for the commodity. Conventionally, in order to prevent such activities, in the semi-self-service type, an image capturing device for capturing a customer who requests registration of the commodity and an image capturing device for capturing the vicinity of an exit of the retail store are installed. A technology to determine whether or not a customer who does not execute checkout is near the exit, by comparing images of the customer captured by these image capturing device, is known. However, in such a conventional shoplifting prevention method, when a group of a plurality of people such as family members or friends goes shopping, there may be a case in which one of the customers belonging to the group leaves the retail store, there is a possibility that the retail store is notified that the customer who did not execute the checkout is about to leave the store. In other words, any of the customers belonging to a group will be prevented from leaving until the checkout for the group is completed.

To solve such problem, there is provided a theft detection machine connectable to a register machine and a checkout machine that are located in a point-of-sale (POS) area of a store, said theft detection machine comprising:
a storage device in which feature data of each customer included in a first image captured during a transaction carried out at the register machine, are stored in association with identification information for the transaction;
an audio output; and
a controller configured to extract feature data from second images that include customers leaving the exit of the POS area of the store, determine whether at least two persons are captured in the first image and whether or not the transaction has been settled at the checkout machine, and upon determining that at least two person are captured in the first image and the transaction has not been settled at the checkout machine, compare the feature data of each customer included in the first image and the feature data extracted from the second images and control the audio output device to sound an alert based on a result of the comparison.

Preferably, the audio output device is installed near an exit of the POS area of the store.

Preferably still, the controller controls the audio output device to sound the alert in response to determining that at least two person are captured in the first image, the transaction has not been settled at the checkout machine, and the result of the comparison indicate that each customer included in the first image is also included the second images.

Preferably yet, the controller controls the audio output device to sound the alert immediately upon determining that at least two person are captured in the first image, the transaction has not been settled at the checkout machine, and the result of the comparison indicate that each customer included in the first image is also included the second images Suitably, the controller controls the audio output device to not sound the alert in response to determining that at least two person are captured in the first image, the transaction has not been settled at the checkout machine, and the result of the comparison indicate that at least one customer included in the first image is not also included the second images.

Suitably still, the feature data of each customer included in the first image are extracted from a plurality of regions in the first image that are identified as face regions.

The invention also relates to a theft detection system comprising:
a register machine and a checkout machine that are located in a point-of-sale (POS) area of a store; and
a theft detection machine that is connected to the register machine and the checkout machine, wherein the theft detection machine includes
   a storage device in which feature data of each customer included in a first image captured during a transaction carried out at the register machine, are stored in association with identification information for the transaction;
   an audio output device; and
   a controller configured to extract feature data from second images that include customers leaving the exit of the POS area of the store, determine whether at least two persons are captured in the first image and whether or not the transaction has been settled at the checkout machine, and upon determining that at least two person are captured in the first image and the transaction has not been settled at the checkout machine, compare the feature data of each customer included in the first image and the feature data extracted from the second images and control the audio output device to sound an alert based on a result of the comparison.

Preferably, the controller controls the audio output device to sound the alert in response to determining that at least two person are captured in the first image, the transaction has not been settled at the checkout machine, and the result of the comparison indicate that each customer included in the first image is also included the second images.

Preferably still, the controller controls the audio output device to sound the alert immediately upon determining that at least two person are captured in the first image, the transaction has not been settled at the checkout machine, and the result of the comparison indicate that each customer included in the first image is also included the second images

Preferably yet, the controller controls the audio output device to not sound the alert in response to determining that at least two person are captured in the first image, the transaction has not been settled at the checkout machine, and the result of the comparison indicate that at least one customer included in the first image is not also included the second images.

Suitably, the feature data of each customer included in the first image are extracted from a plurality of regions in the first image that are identified as face regions.

Suitably still, the theft detection system further comprises:
a first camera positioned to capture an image of a customer side of the registration apparatus; and
a second camera positioned to face the exit of the POS area of the store.

Suitably yet, the register machine is used to register one or more commodities for inclusion in the transaction, and
the checkout apparatus is used by the customer to pay for the transaction.

Additionally, the invention relate to a method of preventing theft at a store that has first and second cameras installed in a point-of-sale (POS) area of the store that includes a register machine and a checkout machine, said method comprising steps of:
capturing with the first camera a first image of customers in front of a register machine during a transaction carried out by the register machine;
extracting feature data from the first image and storing the feature data in association with identification information for the transaction;
capturing second images of customers as the customers are exiting the POS are of the store;
extracting feature data from the second images;
determining whether at least two persons are captured in the first image and whether or not the transaction has been settled at the checkout machine;
upon determining that at least two person are captured in the first image and the transaction has not been settled at the checkout machine, comparing the feature data of each customer included in the first image and the feature data extracted from the second images; and
controlling an audio output device installed near the exit of the POS area of the store to sound an alert based on a result of the comparison.

Preferably, the method further comprises controlling the audio output device to sound the alert in response to determining that at least two person are captured in the first image, the transaction has not been settled at the checkout machine, and the result of the comparison indicate that each customer included in the first image is also included the second images.

Preferably still, the method further comprises controlling the audio output device to sound the alert immediately upon determining that at least two person are captured in the first image, the transaction has not been settled at the checkout machine, and the result of the comparison indicate that each customer included in the first image is also included the second images

Preferably yet, the method further comprises controlling the audio output device not to sound the alert in response to determining that at least two person are captured in the first image, the transaction has not been settled at the checkout machine, and the result of the comparison indicate that at least one customer included in the first image is not also included the second images.

Suitably, the feature data of each customer included in the first image are extracted from a plurality of regions in the first image that are identified as face regions.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram schematically illustrating an example of a layout of a retail store according to an embodiment;
Fig. 2 is a diagram schematically illustrating components of a monitoring apparatus according to the embodiment;
Fig. 3 is a diagram illustrating an example of components of a registration apparatus according to the embodiment;
Fig. 4 is a diagram illustrating an example of a first captured image;
Fig. 5 is an example of a scatter diagram explaining a method of identifying a face region appearing in the first captured image;
Fig. 6 is a flowchart depicting an example of the flow of an identification processing of the first captured image executed by the registration apparatus according to the embodiment;
Fig. 7 is a diagram illustrating components of a checkout apparatus according to the embodiment;
Fig. 8 is a diagram illustrating components of a monitoring server according to the embodiment;
Fig. 9 is a diagram illustrating data structures used by the monitoring server to specify a customer within an image; and
Fig. 10 is a flowchart depicting an example of the flow of a monitoring processing executed by the monitoring server according to the embodiment.

### DETAILED DESCRIPTION

In accordance with an embodiment, a theft detection machine is connected to a register machine and a checkout machine that are located in a point-of-sale (POS) area of a store. The theft detection machine includes a storage device in which feature data of each customer included in a first image captured during a transaction carried out at the register machine, are stored in association with identification information for the transaction, an audio output device installed near an exit of the POS area of the store, and a controller configured to extract feature data from second images that include customers leaving the exit of the POS area of the store, determine whether at least two persons are captured in the first image and whether or not the transaction has been settled at the checkout machine, and upon determining that at least two person are captured in the first image and the transaction has not been settled at the checkout machine, compare the feature data of each customer included in the first image and the feature data extracted from the second images and control the audio output device to sound an alert based on a result of the comparison.

### (Description of Monitoring Apparatus)

Hereinafter, with reference to the accompanying drawings, an embodiment of a monitoring apparatus 100 including a monitoring server which is an example of an information processing apparatus according to the present invention is described in detail. In the present embodiment, an example in which the present invention is applied to a retail store such as a supermarket is described, but the present invention is not limited to this embodiment.

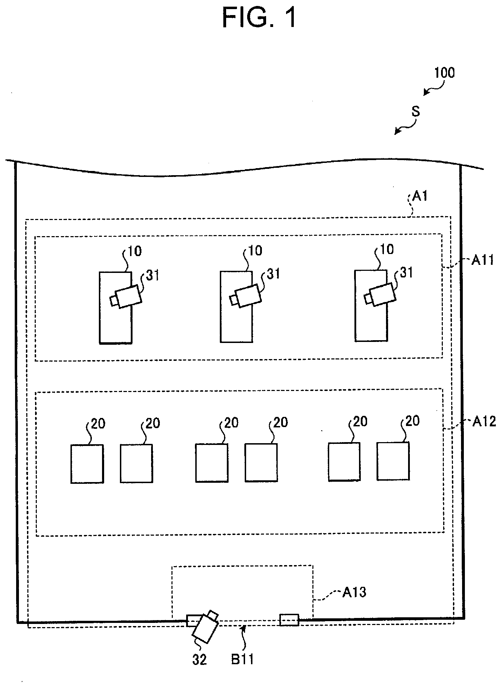

Fig. 1 is a diagram schematically illustrating an example of a layout in a retail store S provided with the monitoring apparatus 100 according to the present embodiment. As shown in Fig. 1, the retail store S has point-of-sale (POS) area A1 relating to registration and checkout of a commodity. The POS area A1 includes a registration area A11, a checkout area A12, and an exit area A13.

The registration area A11 is an example of a first area located on an entrance side of the POS area A1, and a plurality of the registration apparatuses 10 (which are examples of register machines) is provided in the registration area A11. The accounting area A12 is an example of a second area where a customer executes checkout for the commodity registered in the registration area A11, and a plurality of the checkout apparatuses 20 (which are examples of checkout machines) is provided in the accounting area A12. The exit area A13 is an example of a third area located at or adjacent to an exit B11 of the POS area A1. The exit B11 of the POS area A1 can be provided at or adjacent to an exit of the retail store S. Although not shown, it is assumed that there is a display device on which commodities, which are sales objects, are displayed in the retail store S (for example, above the POS area A1, etc.).

The registration apparatus 10 is a commodity sales processing apparatus operated by the store clerk to execute a registration processing of a commodity to be purchased by the customer. The checkout apparatus 20 is a commodity sales data processing apparatus operated by the customer to execute a checkout processing of the commodity registered by the registration apparatus 10. In other words, the registration apparatus 10 and the checkout apparatus 20 cooperate with each other to realize a checkout system called semi-self-service type.

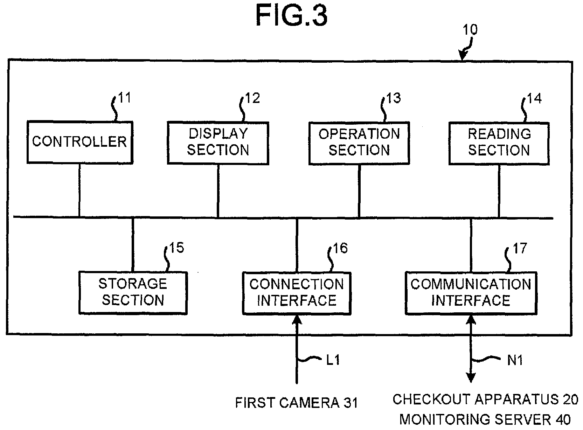

In the retail store S shown in Fig. 1, the operation at the time the customer purchases the commodity is executed as follows . First, the customer puts the purchased commodity in a shopping basket and carries it to the registration apparatus 10 in the registration area A11. At the registration apparatus 10, the store clerk registers the commodity by using a reading section 14 (Fig. 3) described later to read a barcode attached to the commodity. At this time, the customer waits for the completion of the registration processing in the vicinity of the registration apparatus 10 to which the customer carried his or her own basket. If the registration of all commodities in one transaction is completed, the store clerk selects (designates) one checkout apparatus 20, at which the checkout operation is to be performed, and notifies the customer of the checkout apparatus 20 to guide the customer to the checkout apparatus 20, which will perform the checkout operation. The registration apparatus 10 transmits necessary information for the checkout including information such as a unit price and a quantity of each registered commodity to the designated checkout apparatus 20.

After the registration of the commodities is completed at the registration apparatus 10, the customer moves to the checkout area A12 while carrying the commodities (or the shopping basket containing the commodities) to execute the checkout for settling the payment for the registered commodities at the checkout apparatus 20 designated by the store clerk. At that time, the checkout apparatus 20 executes the checkout processing based on the checkout information previously transmitted from the registration apparatus 10. If the customer completes the checkout, the customer puts the purchased commodities in a shopping bag or the like and moves to the exit area A13 (exit B11). After that, the customer passes through the exit B11 and exits from the POS area A1.

As described above, in the semi-self-service system, since the registration and the checkout are separately performed, it is possible to improve processing efficiency such as shortening register waiting time. However, in the semi-self-service system, since the checkout is left to the customer, there is a possibility that shoplifting (where a customer goes out of the retail store with the commodity without paying for the commodity) might occur.

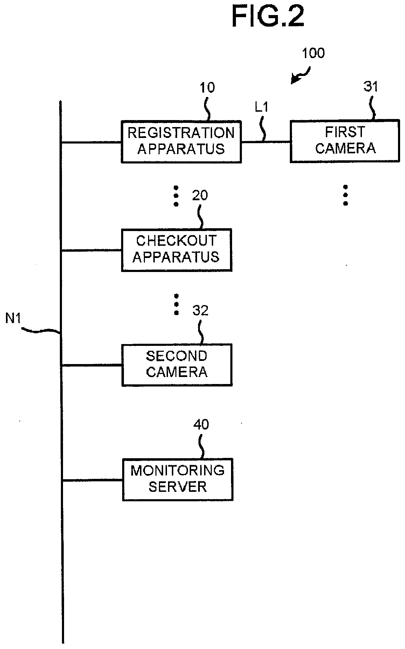

Therefore, in the registration apparatus 100 of the present embodiment, in the registration area A11 and the exit area A13, images including a face of the customer are respectively captured, and in a monitoring server 40 (Fig. 2), a customer who is likely to engage in shoplifting is detected based on the captured images and the retail store is notified. The components of the monitoring apparatus 100 according to the present embodiment is described below.

Fig. 2 is a diagram schematically illustrating hardware components of the monitoring apparatus 100 according to the present embodiment. As shown in Fig. 1, the monitoring apparatus 100 includes a first camera 31, a second camera 32, and the monitoring server 40 in addition to the above-mentioned registration apparatus 10 and checkout apparatus 20. The registration apparatus 10, the checkout apparatus 20, the second camera 32 and the monitoring server 40 are communicably connected to each other through a network N1 such as a LAN (Local Area Network).

The first camera 31 captures the face of the customer adjacent to the registration apparatus 10 in the registration area A11 which is an example of the first area. The first camera 31 is arranged for each registration apparatus 10 (Fig. 1) . More preferably, in each registration apparatus 10, the first camera 31 is arranged at a position capable of capturing the face of the customer. The registration apparatus 10 and the first camera 31 are connected via a connection line L1 (Figs. 2 and 3). The installation position of the first camera 31 is not particularly limited to the example shown in the figures and the first camera 31 may be arranged integrally with the registration apparatus 10 or may be arranged on a ceiling or the like of the retail store in a form of a monitoring camera.

In the present embodiment, the first camera 31 repeatedly captures images including a face of a customer and faces of other customers as companions who enter the retail store S together with the customer and participate in the registration processing executed by the registration apparatus 10. That is, while the registration processing is executed, the other customers who are companions are also at a position adjacent to the registration apparatus 10.

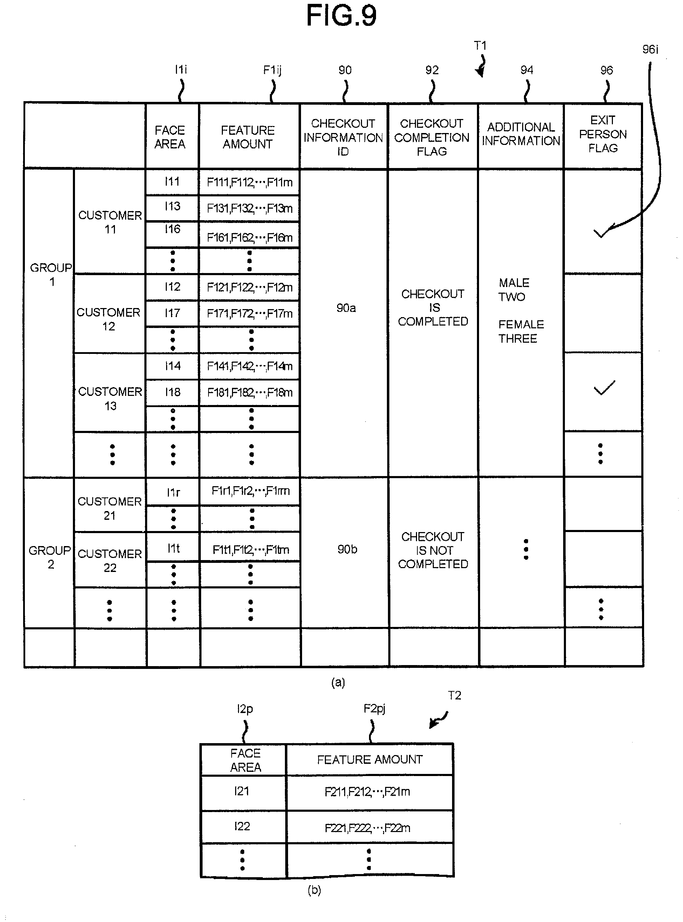

After the registration processing is completed, the registration apparatus 10 generates the checkout information described above and checkout information ID 90 (Fig. 9) which is an example of identification information uniquely identifying the checkout information of one transaction. Then, the registration apparatus 10 transmits the checkout information and the checkout information ID 90 to the checkout apparatus 20 designated by the store clerk. Further, the registration apparatus 10 transmits the checkout information ID 90 and an image including the face of the customer relating to one transaction among the images (hereinafter, referred to as first images I1) repeatedly captured by the first camera 31 during the registration processing to the monitoring server 40. The first image I1 is an example of a first captured image and can be a still image or a moving image.

The checkout apparatus 20 executes the checkout processing based on the checkout information transmitted from the registration apparatus 10. Then, after the checkout processing is completed, the checkout apparatus 20 issues a checkout completion flag 92 indicating that the checkout processing relating to the checkout information is completed. The checkout apparatus 20 then transmits the checkout completion flag 92 and the checkout information ID 90 to the monitoring server 40. The second camera 32 captures a customer who is present in the exit area A13 which is an example of the third area. The second camera 32 is arranged at a position where an image including the face of the customer who passes through the exit B11 can be captured by the second camera 32. The second camera 32 transmits a captured second image I2 to the monitoring server 40. The second image I2 is an example of a second captured image. The installation position of the second camera 32 is not particularly limited to the example shown in the figures, and the second camera 32 may be arranged on a ceiling or the like of the retail store S in the form of the monitoring camera.

The monitoring server 40, which is an example of a theft detection machine, monitors the operation of the customer within the POS area A1 based on the first image I1 captured by the first camera 31 and the second image I2 captured by the second camera 32, for example. Based on the first image I1 and the second image 12, the monitoring server 40 executes detection and notification of a customer who exits from the POS area A1 without completing the checkout. Even if a transaction relating to a plurality of customers belonging to one group who enter the retail store S together is not settled, the monitoring server 40 permits the customers of that group to exit from the checkout area A1 without any notification so long as the customer is not the final person of the group to exit (hereinafter referred to as "final exit person").

### (Description of of Registration Apparatus)

Fig. 3 is a diagram illustrating hardware components of the registration apparatus 10 according to the present embodiment. As shown in Fig. 3, the registration apparatus 10 includes a controller 11, a display section 12, an operation section 13, the reading section 14, a storage section 15, a connection interface 16 and a communication interface 17. The controller 11 has a configuration of a general computer system including a CPU (Central Processing Unit), a SoC (System-on-a-Chip), a ROM (Read Only Memory) and a RAM (Random Access Memory).

The controller 11 is connected to the display section 12, the operation section 13, the reading section 14, the storage section 15, the connection interface 16 and the communication interface 17 via a bus line.

The display section 12 has a display device such as a liquid crystal display. Under the control of the controller 11, the display section 12 displays various information such as a commodity name, a commodity code and the like of the registered commodity. The operation section 13 has various operation keys and a pointing device, and receives an operation input by an operator (store clerk) . For example, the operation section 13 has operation keys instructing start and completion of the registration processing, numeric keys for inputting the commodity code and the number of commodities, and the like. The operation section 13 may be a touch panel provided on a display screen of the display section 12.

The reading section 14 is a code reader capable of reading a code symbol such as a barcode and a two-dimensional code. For example, the reading section 14 reads the commodity code held in a code symbol from the code symbol assigned to the commodity. Herein, the commodity code is commodity identification information, and is uniquely assigned to each type of the commodity.

The storage section 15 is an HDD (Hard Disk Drive) or a flash memory, for example. The storage section 15 stores a program to be executed by the controller 11 and various data used for executing the program. For example, the storage section 15 stores beforehand a commodity master file (not shown) in which the commodity code of each commodity is associated with the commodity information including the commodity name and the unit price of the commodity.

The connection interface 16 is an interface circuit connectable to the first camera 31. The connection interface 16 receives the first captured image input from the first camera 31 via the connection line L1. The communication interface 17 is connectable to the network N1. The communication interface 17 transmits and receives various information to and from external devices (e.g., the checkout apparatus 20 and the monitoring server 40) connected to the network N1.

If the code symbol assigned to the commodity which is a purchase object is read using the reading section 14 by the operation of the store clerk in the registration apparatus 10 having the above configuration, the controller 11 registers the commodity by storing the commodity code read by the reading section 14 in the RAM. If a purchase quantity (number) of commodities is input, the controller 11 registers the quantity in association with the commodity code. Further, while the registration processing of the commodity is executed, the controller 11 causes the first camera 31 to capture the first image I1.

If the registration of the commodity in one transaction is completed, the controller 11 generates the checkout information based on the commodity code and the purchase quantity that are registered so far. The checkout information includes, for example, the commodity name and an amount of each commodity (commodity code), a total payment amount and the like. The commodity name and the amount thereof are obtained by the controller 11 based on the commodity information registered in the commodity master file stored in the storage section 15.

In the controller 11, if a specific checkout apparatus 20 is selected (designated) by the store clerk using the operation section 13, the checkout information and the checkout information ID 90 are transmitted to the checkout apparatus 20. The selection of the checkout apparatus 20 may be automatically executed by the controller 11 based on a state of availability of the checkout apparatus 20. Further, the controller 11 transmits the checkout information ID 90 and the first image I1 including the face of the customer among the plurality of first images I1 acquired during the registration processing to the monitoring server 40. The number of the first images I1 to be transmitted to the monitoring server 40 is not particularly limited.

The first image I1 captured by the first camera 31 is a reference image for identifying the customer relating to one transaction in a processing to specify a person who exits (hereinafter, referred to as "exit person specifying processing") described later. Therefore, the controller 11 selects only the first image I1 from which characteristic parts of the face of each customer are captured, and transmits it to the monitoring server 40. For example, the controller 11 preferably selects an image to be transmitted to the monitoring server 40 based on a state such as an area of a face region and an orientation of the face in the first image I1, i.e., selects the first image I1 in which the face of each customer is captured as large as possible from the front among the first images I1 captured during the registration processing and transmits it to the monitoring server 40.

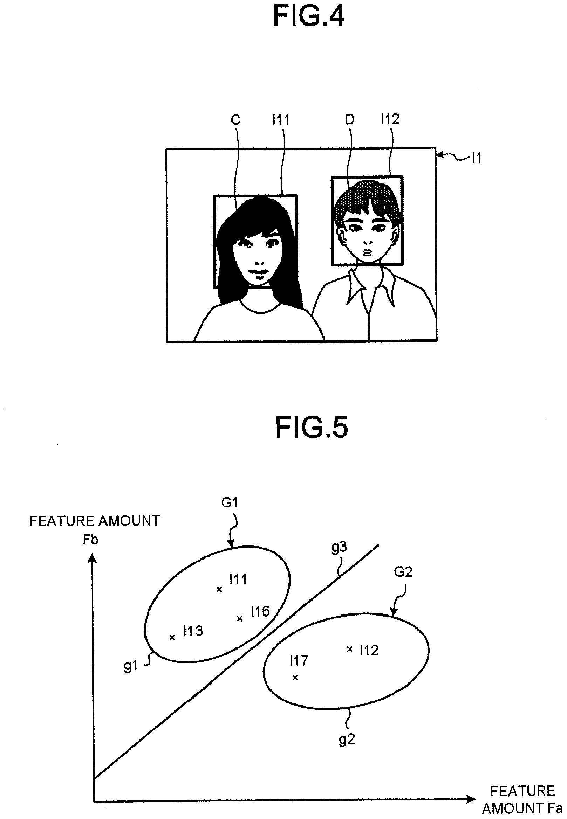

Fig. 4 shows an example of the first image I1. Since a plurality of customers C, D, ... relating to one transaction usually act together, there is a high possibility that they are next to each other while the registration processing is executed by the registration apparatus 10. Fig. 4 shows an example of a first image I1 including two customers C and D captured by the first camera 31. Since image capturing by the first camera 31 is repeatedly executed, there is a high possibility that another customer other than customers C and D relating to the same transaction appears in another first image I1.

If the first image I1 shown in Fig. 4 is captured by the first camera 31, the controller 11 of the registration apparatus 10 detects a face region I11 of the customer C and a face region I12 of the customer D, respectively, and temporarily stores them in the RAM of the registration apparatus 10. Herein, the face region I11 indicates a face region which is firstly detected in the same transaction. The face region I12 indicates a face region which is detected after the detection of the face region I11 in the same transaction. Since the first image I1 is repeatedly captured, a plurality of the face regions of customers C, D,... is respectively captured. In other words, a plurality of face regions I1i (i = 1, 2,...) is obtained. The face region I1i indicates an ith detected face region.

Next, with reference to Fig. 5, an identification method for identifying how many faces of the customers are included in the face region I1i appearing in the first image I1 by the registration apparatus 10 is described. Fig. 5 is an example of a scatter diagram for explaining a method for identifying the face region I1i appearing in the first image I1. In particular, Fig. 5 is an example of a scatter diagram with two kinds of feature data Fa and feature data Fb respectively set as a horizontal axis and a vertical axis among m kinds of feature data respectively calculated from a plurality of face regions I1i including two customers C and D. The m kinds of feature data are, for example, commonly used in facial recognition such as a hue and chromaticity of the face region I1i, an interocular distance, an area of a region sandwiched between an upper eyelid and a lower eyelid, a positional relationship between eyes and a nose, a positional relationship between the nose and a lip, and the like.

Each point plotted in Fig. 5 shows the face regions I1i (i = 1, 2,...), respectively. As can be seen from Fig. 5, the face regions I11, 113 and I16 form a single cluster (cluster G1). The face regions I12 and I17 form another cluster G2. Then, a boundary of the cluster G1 is partitioned by an identification function g1, and a boundary of the cluster G2 is partitioned by an identification function g2. Thus, a processing of grouping samples (face regions I1i in this case) based on values of the feature data Fa and Fb is generally called clustering, which is well known in the art. Fig. 5 is an example of executing clustering using two kinds of feature data Fa and Fb; but in general, the clustering is executed using m kinds of the feature data Fa, ..., Fm. In Fig. 5, the identification functions g1 and g2 having an elliptical shape and indicating edges of the clusters are shown, but the shapes of the identification functions g1 and g2 are not limited to the elliptical shapes, and for example, they may be identification function g3 of a linear shape.

By such clustering, the clusters Ga (a = 1, 2,...) to which the captured face region I1i belongs can be specified based on the values of the feature data Fa and Fb calculated from the face regions I1i. The face regions I1i belonging to the same cluster each corresponds to the same customer C or customer D. However, which cluster among the clusters Ga corresponds to customer C is unknown.

### (Description of Identification Processing of First Captured Image)

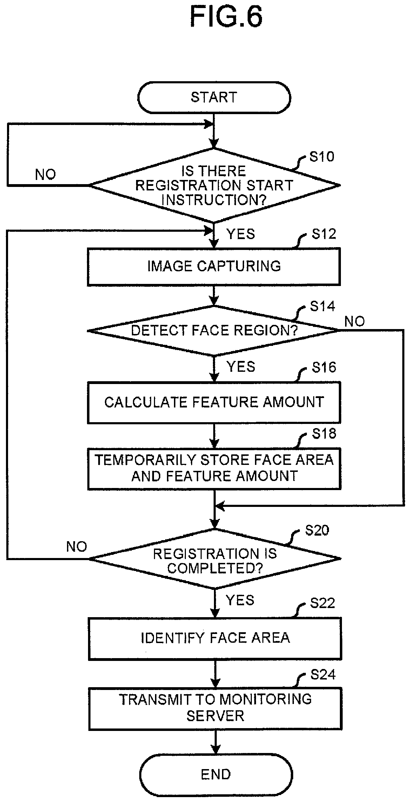

Next, an identification processing executed by the registration apparatus 10 for detecting face regions I1i (i = 1, 2, ...) from the first images I1 captured by the first camera 31, further identifying the detected face regions I1i and transmitting them to the monitoring server 40 is described. Fig. 6 is a flowchart depicting an example of the flow of the identification processing of the first image I1 (first captured image) executed by the registration apparatus 10 according to the present embodiment. The identification processing is executed in the background of the registration processing by the controller 11. Detection of the face region and calculation of the feature data executed in the present identification processing are all executed using well-known technologies.

First, the controller 11 determines whether there is a registration start instruction via the operation section 13 (Act S10) . If there is the registration start instruction (Yes in Act S10), the flow proceeds to the processing in Act S12. On the other hand, if there is no registration start instruction (No in Act S10), the processing in Act S10 is repeated.

The controller 11 enables the first camera 31 to capture images containing the face of each customer adjacent to the registration apparatus 10 (Act S12).

Subsequently, the controller 11 determines whether the face region I1i is detected from the first image I1 input from the first camera 31 (Act S14). If the face region I1i is detected (Yes in Act S14), the flow proceeds to the processing in Act S16. On the other hand, if the face region I1i is not detected (No in Act S14), the flow proceeds to the processing in Act S20. If the first image I1 includes a plurality of the face regions I1i, all the face regions I1i are detected.

The controller 11 calculates a predetermined feature data F1ij (j = 1, 2, ..., m) from the face region I1i (Act S16) . Here, the feature data F1ij indicates the jth feature data calculated from the ith detected face region I1i. It is assumed that the m kinds of feature data are predetermined.

Next, the controller 11 temporarily stores the face region I1i in RAM in association with the feature data F1ij calculated from the face region I1i (Act S18). At this time, in order to reduce the data volume of the first image I1, it is desirable to cut out only the face region I1i as a partial image and store it rather than the entire first image I1. For example, if a plurality of the face regions appears in one first image I1, as shown in Fig. 4, a plurality of the face regions I11 and I12 is cut out and stored.

Further, the controller 11 determines whether or not the operation section 13 received instructions by a user to complete the registration processing (Act S20). If there is no registration completion instruction (No in Act S20), the controller 11 returns to the processing in Act S12. As a result, while the commodity is registered, the face region I1i captured by the first camera 31 is temporarily stored in association with the feature data F1ij. Although not shown in Fig. 6, in order to facilitate the exit person specifying processing described later, the store clerk may input additional information 94 (for example, number of persons belonging to the group, gender, etc.) indicating the number of customers relating to the transaction being registered currently via the operation section 13 and store the input additional information 94 in the RAM while the registration processing is executed.

If the registration completion is instructed in Act S20 (Yes in Act S20), the controller 11 compares the feature data F1ij each other among the plurality of the face regions I1i temporarily stored to identify the face region I1i in the cluster of the same customer (Act S22). Specifically, the controller 11 clusters plural face regions I1i based on the feature data F1ij (Fig. 5). If the additional information 94 described above is obtained, the number of clusters obtained as a result of clustering can be known beforehand, and thus, computation amount for the processing in Act S22 can be reduced. The identification result by the processing in Act S22, i.e., the face region I1i and the feature data Flij identified for each customer are temporarily stored in the RAM again. The number of the face regions I1i, which can be stored in the RAM, is not limited, but if the area of the face region I1i is smaller than a predetermined minimum area, there is a possibility that the reliability of the feature data F1ij calculated from the face region I1i is low. Therefore, since the performance of the exit person specifying processing executed by the monitoring server 40 may degrade when the area of the face region I1i is small, it is preferable to exclude it from images to be stored.

Subsequently, the controller 11 associates the face region I1i identified in Act S22 with the feature data F1ij, and transmits them to the monitoring server 40 together with the checkout information ID 90 (Act S24). Then, the controller 11 ends the identification processing of the face region I1i.

### (Description of Checkout Apparatus)

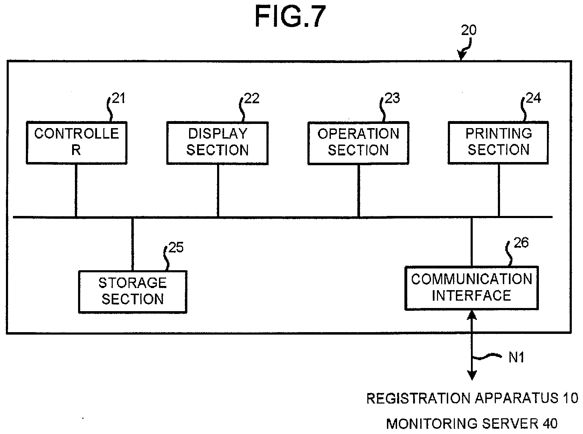

Fig. 7 is a diagram illustrating hardware components of the checkout apparatus 20 according to the present embodiment. As shown in Fig. 7, the checkout apparatus 20 includes a controller 21, a display section 22, an operation section 23, a printing section 24, a storage section 25, and a communication interface 26. The controller 21 has a constitution of a general computer system including a CPU, a SoC, a ROM and a RAM.

The controller 21 is connected to the display section 22, the operation section 23, the printing section 24, the storage section 25, and the communication interface 26 via a bus line.

The display section 22 has a display device such as a liquid crystal display. The display section 22 displays various information such as the checkout information under the control of the controller 21. The operation section 23 has various operation keys and a pointing device, and receives operations of operators (customers C, D, ...). For example, the operation section 23 includes operation keys to receive instructions by a user to start and complete the checkout processing. The operation section 23 may be a touch panel provided on the display surface of the display section 22.

The printing section 24 is a printing apparatus such as a thermal printer. Under the control of the controller 21, the printing section 24 prints detail of the checkout information on a paper medium such as a receipt paper. The storage section 25 is an HDD, a flash memory or the like, for example. The storage section 25 stores a program executed by the controller 21 and various data used for executing the program.

The communication interface 26 is an interface circuit connectable to the network N1. The communication interface 26 transmits and receives various information to and from external devices (e.g., the registration apparatus 10 and the monitoring server 40) connected to the network N1.

A money deposit device for receiving deposit of coins and bills and a money dispensing device for paying changes are connected to the controller 21 via a connection interface (neither is shown).

In the checkout apparatus 20, the controller 21 temporarily stores the checkout information transmitted from the registration apparatus 10 in the RAM, and waits for the start of the checkout processing relating to the checkout information. If the customers C, D, ... (or at least one of them) move to the checkout apparatus 20 instructed by the store clerk of the registration apparatus 10, the start of the checkout processing is instructed via the operation section 23. If the start of the checkout processing is instructed, the controller 21 receives payment (deposit) of the commodity based on the temporarily stored checkout information. If the payment is completed, the controller 21 enables the printing section 24 to output a receipt paper on which the detail thereof is printed, and ends the checkout processing.

The controller 21 issues the checkout completion flag 92 indicating that the checkout processing relating to the checkout information is completed at the time the checkout processing is completed. The controller 21 then transmits the checkout information ID 90 for specifying the checkout information and the checkout completion flag 92 associated with each other to the monitoring server 40.

### (Description of Monitoring Server)

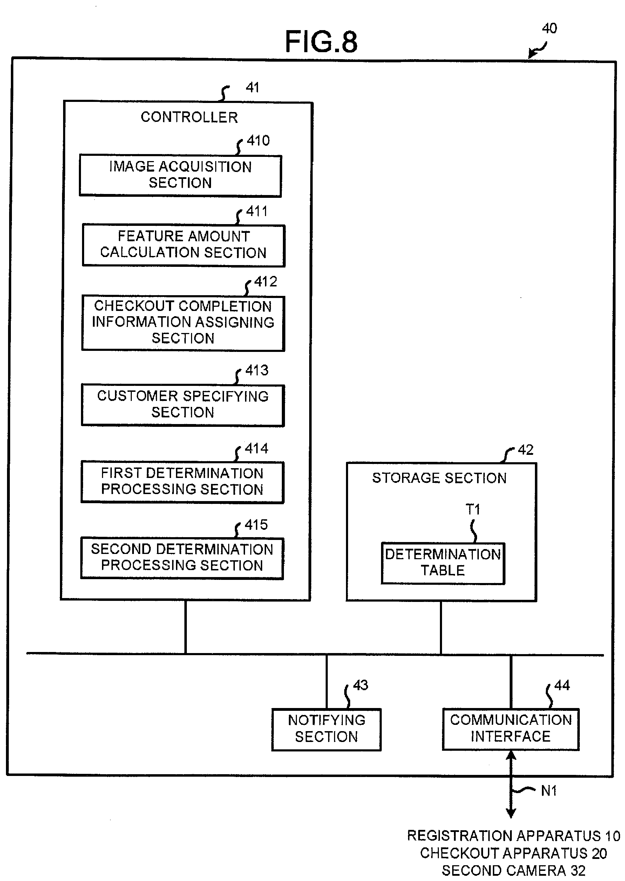

Fig. 8 is a diagram illustrating hardware and software components of the monitoring server 40 according to the present embodiment. As shown in Fig. 8, the monitoring server 40 includes a controller 41, a storage section 42, a notifying section 43, and a communication interface 44. The controller 41 has a constitution of a general computer system including a CPU, a SoC, a ROM, and a RAM.

The storage section 42, the notifying section 43 and the communication interface 44 are connected to the controller 41 via a bus line. The storage section 42 is an HDD, a flash memory or the like, for example. The storage section 42 stores a program executed by the controller 41 and various data used for executing the program. The storage section 42 is an example of the storage module, and stores a determination table T1 (Fig. 9) for monitoring a status of completion of the checkout processing for an exit person who exits from the exit B11 (Fig. 1) of the POS area A1.

The notifying section 43 is an example of a notifying module and includes an audio output device such as a buzzer or a chime. The notifying section 43 informs an improper exit, e.g., an exit of a customer who has completed the checkout by generating a warning sound based on a determination result of a second determination processing section 415 described later included in the controller 41.

The communication interface 44 is an interface circuit connected to the network N1, and transmits and receives various information to and from other devices (e.g., the registration apparatus 10, the checkout apparatus 20, and the second camera 32) .

As shown in Fig. 8, the controller 41 includes an image acquisition section 410, a feature data calculation section 411, a checkout completion information assigning section 412, a customer specifying section 413, a first determination processing section 414, and the second determination processing section 415 as functional sections. These functional sections are realized in software by executing a program stored in the storage section 42 by the CPU of the controller 41, or in hardware by a dedicated processor provided in the controller 41.

The image acquisition section 410 acquires the face region I1i detected from the first image I1 captured by the first camera 31 and the feature data F1ij of the face region I1i from the registration apparatus 10 via the communication interface 44. The image acquisition section 410 acquires the second image I2 captured by the second camera 32.

The feature data calculation section 411 detects a face region from the second image I2 acquired by the image acquisition section 410. The face region detected at this time is hereinafter referred to as a face region I2p. The face region I2p is pth detected face region from the second image I2 acquired by the image acquisition section 410. Then, the feature data calculation section 411 calculates feature data F2pj indicating face features of the face region I2p. The feature data F2pj is m kinds of feature data the same as the feature data F1ij described above. The feature data calculation section 411 temporarily stores the detected face region I2p and the feature data F2pj in an associated manner. The image acquisition section 410 may acquire only the first image I1 captured by the first camera 31 from the registration apparatus 10, and the feature data calculation section 411 may detect the face region I1i and calculate the feature data F1ij.

The checkout completion information assigning section 412 is an example of an adding module. The checkout completion information assigning section 412 receives the checkout completion flag 92 issued every time the checkout of one transaction is executed and the checkout information ID 90 for specifying the one transaction which are transmitted from the checkout apparatus 20, and adds the received checkout completion flag 92 to the determination table T1 (Fig. 9) described later stored in the storage section 42.

The customer specifying section 413 is an example of a specifying module, and compares the face region I1i with the face region I2p. Specifically, the customer specifying section 413 specifies a face region I1i closest to the face region I2p based on a similarity degree between the feature data F1ij of the face region I1i and the feature data F2pj of the face region I2p. That is, the customer specifying section 413 executes the exit person specifying processing to determine which cluster identified in Act S22 in Fig. 6 the face region I2p belongs to. The similarity degree between the feature data F2pj and the feature data F1ij can be calculated, for example, by calculating the sum of differential values between the same feature data F2pj and the feature data F1ij. In this case, it is determined that the smaller the sum of the differential values is, the higher the similarity degree is. Then, a customer corresponding to the face region I1i which has the highest similarity degree with the face region I2p is specified as the exit person. Alternatively, by comparing the feature data F2pj with the identification functions g1, g2 and g3 shown in Fig. 5, the exit person may be specified by determining which cluster the feature data F2pj belongs to.

Through such an exit person specifying processing, the customer specifying section 413 specifies whether anyone among the customers C, D, ... relating to one transaction is about to exit from the exit B11 of the POS area A1, or whether there is a customer in the stored face region I1i. The exit person specifying processing can specify, for example, information indicating that an ath customer in an nth group is about to leave. However, it is not possible to specify which customer among the customers C, D, ... is the exit person. The customer specifying section 413 compares the face region I2p with all the face regions I1i stored by the storage section 42, since it is unknown which transaction the specified exit person is involved in.

The first determination processing section 414 is an example of a first determination module, and executes a checkout completion determination processing for determining whether information indicating the completion of the checkout is added to the checkout information ID 90 associated with the customer specified by the exit person specifying processing. Specifically, the first determination processing section 414 determines whether the checkout processing is completed based on the state of the checkout completion flag 92 of the group to which the specified exit person belongs in the determination table T1 (Fig. 9) described later.

The second determination processing section 415 is an example of a second determination module, and executes a final exit person determination processing for determining whether another customer associated with the same checkout information ID 90 as the customer specified by the exit person specifying processing is already specified by the customer specifying section 413. Specifically, the second determination processing section 415 determines whether the customer is the final exist person based on a state of an exit person flag 96 of the group to which the specified customer belongs in the determination table T1 (Fig. 9) described later.

Furthermore, the second determination processing section 415 executes a notification determination processing for issuing an instruction to execute notification to the notifying section 43 on condition that the checkout processing in one transaction relating to the specified customer is not yet completed and the specified customer is the final exit person relating to the one transaction.

The second determination processing section 415 executes a processing for disabling data (i.e., face region I1i and feature data F1ij) (hereinafter, referred to as "group data disablement processing") of all of the customers C, D, ... relating to the one transaction from the determination table T1 in a case in which the checkout processing of the one transaction relating to the specified exit person is completed. By executing the group data disablement processing, it is possible to narrow the data range for comparison at the time of carrying out the exit person specifying processing from the next time, so that the amount of computation of the customer specifying section 413 can be reduced.

The second determination processing section 415 executes a processing for disabling only the data (i.e., face region I1i and feature data F1ij) of the specified exit person from the determination table T1 (hereinafter, referred to as "specific data disablement processing") in a case in which the checkout processing of one transaction relating to the specified customer is not completed and the specified customer is not the final exit person relating to the one transaction. By executing the specific data disablement processing, it is possible to narrow data range for the comparison of the face region I1i at the time of carrying out the exit person specifying processing from the next time, so that the amount of computation of the customer specifying section 413 can be reduced. In addition to disabling the corresponding data, the group data disablement processing and the specific data disablement processing may delete the corresponding data from the determination table T1.

### (Description of Exit Person Specifying Processing)

Next, a specific method of the exit person specifying processing executed by the customer specifying section 413 is described with reference to Fig. 9, which illustrates data structures used in specifying a customer, including the determination table T1 and an exit person table T2 stored in the storage section 42.

The determination table T1 stores the information transmitted to the monitoring server 40 from the registration apparatus 10 after the registration processing and the information transmitted to the monitoring server 40 from the checkout apparatus 20 after the checkout processing which are both described above. As shown in Fig.9(a), the determination table T1 stores the face regions I1i (i = 1, 2,...) ith detected from the first image I1 and m kinds of feature data F1ij (j = 1, 2,..., m) calculated from the face region I1i transmitted from the registration apparatus 10. The determination table T1 stores the checkout information ID 90 and the checkout completion flag 92 which are transmitted from the checkout apparatus 20, the additional information 94 input by the store clerk and the exit person flag 96 indicating that the customer belonging to each group exited from the exit B11 of the POS area A1, which are transmitted from the registration apparatus 10.

At this time, the checkout information ID 90 is assigned to each transaction and is transmitted from both the registration apparatus 10 and the checkout apparatus 20 to the monitoring server 40. Based on the checkout information ID 90, the controller 41 of the monitoring server 40 stores the face region I1i and the feature data F1ij of each customer transmitted from the registration apparatus 10 in the determination table T1 in association with the checkout completion flag 92 and the additional information 94 transmitted from the registration apparatus 10. For example, as shown in Fig. 9, a number 90a is assigned to the transaction of a group 1 as the checkout information ID 90, and a number 90b is assigned to the transaction of another group 2 as the checkout information ID 90. Therefore, based on the fact that the same checkout information ID 90 is assigned, the information transmitted from the registration apparatus 10 and the information transmitted from the checkout apparatus 20 can be associated with each other.

Incidentally, it is not always necessary to store the face region I1i in the determination table T1. However, by storing the face region I1i, it is possible to set a new feature data F1ij by, for example, analyzing the stored face region I1i when a specified customer cannot be identified.

Herein, in order to simplify the following description, it is assumed that each customer belonging to each group K (K = 1, 2,...) who executes the transaction is represented by a reference numeral Kh (K = 1, 2, ... , and h = 1, 2, ... ). A customer 11, a customer 12, a customer 13, ... belong to a group 1, and a customer 21, a customer 22, ... belong to a group 2.

On the other hand, the image acquisition section 410 of the monitoring server 40 acquires the second images I2 at predetermined time intervals from the second camera 32 as described above. Then, the feature data calculation section 411 detects the pth face region I2p (p = 1, 2, ...) from the acquired second images I2 and calculates the feature data F2pj (j = 1, 2, ... m) of the detected face region I2p. Through this processing, the feature data calculation section 411 acquires an exit person table T2 shown in Fig. 9(b). The exit person table T2 stores the face region I2p and the feature data F2pj in association with each other.

Based on the feature data F2pj of the face region I2p in the exit person table T2, the customer specifying section 413 determines whether the face region I2p is similar to one of the face regions I1i (i = 1, 2, ...) registered in the determination table T1 or whether the face region I2p is not similar to any one of the face regions I1i. At this time, in the determination table T1, the face regions I1i of customers Kh relating to all transactions are registered, and since it is unknown that the face region I2p of the exit person table T2 is information of the customer Kh relating to which transaction, the customer specifying section 413 compares the face region I2p with all the face regions I1i registered in the determination table T1.

The comparison executed by the customer specifying section 413 may be executed by calculating the similarity degree of the feature data as described above or by specifying the cluster to which the face region I2p belongs using the identification functions g1 and g2 described in Fig. 5. Then, if the face region I2p is the face region irrelevant to the transaction (the face region not stored in the determination table T1), then the customer specifying section 413 determines that the customer corresponding to the face region I2p does not exist, and ignore the face region I2p.

### (Description of Notification Determination Processing)

Next, the content of the notification determination processing executed by the first determination processing section 414 and the second determination processing section 415 is described. After the customer specifying section 413 determines the similarity degree between the face region I2p and the face region I1i, the first determination processing section 414 determines whether the checkout processing for the customer Kh having the specified face region I1i is completed. Specifically, the first determination processing section 414 refers to the checkout completion flag 92 for the group to which the specified customer Kh belongs in the determining table T1. Then, on condition that the checkout completion flag 92 indicates that the checkout is completed, the first determination processing section 414 determines that the checkout processing of the group to which the specified customer Kh belongs is completed.

Next, the second determination processing section 415 determines whether the specified customer Kh is the final exit person of the group to which the customer Kh belongs. Specifically, the second determination processing section 415 assigns a check mark 96i to indicate that the customer Kh exited to the exit person flag 96 column each time the customer Kh who is about to exit is specified. Furthermore, each time the customer specifying section 413 specifies the customer Kh, the second determination processing section 415 refers to a column corresponding to the customer Kh in the exit person flag 96 column to determine that the specified customer Kh is the final exit person in the group on condition that the check marks 96i are assigned to all the exit person flag 96 columns corresponding to other customers Kh belonging to the same group. For example, the determination table T1 in Fig. 9 indicates that the customer 11 and the customer 13 in the group 1 already exited.

The second determination processing section 415 notifies the unfair exit by enabling the notifying section 43 to generate a warning sound on condition that the checkout processing of one transaction relating to the customer Kh specified from the face region I2p is not completed and the customer Kh is the final exit person among the customers belonging to the same group in one transaction relating to the customer Kh. In other words, on condition that all the other customers assigned with the same checkout information ID 90 as the customer Kh are already specified by the customer specifying section 413 and the check mark 96i is assigned to the exit person flag 96 column, the second determination processing section 415 enables the notifying section 43 to generate the warning sound.

The second determination processing section 415 does not enable the notifying section 43 to generate the warning sound if the above conditions are not satisfied. The second determination processing section 415 does not enable the notifying section 43 to generate the warning sound if the checkout processing of one transaction relating to the customer Kh specified from the face region I2p is completed. Furthermore, the second determination processing section 415 does not enable the notifying section 43 to generate the warning sound in a case in which the checkout processing of one transaction relating to the customer Kh specified from the face region I2p is not completed and the customer Kh is not the final exit person among the customers belonging to the same group in one transaction relating to the customer Kh.

### (Description of Flow of Processing Executed by Customer Specifying Section and Determination Processing section)

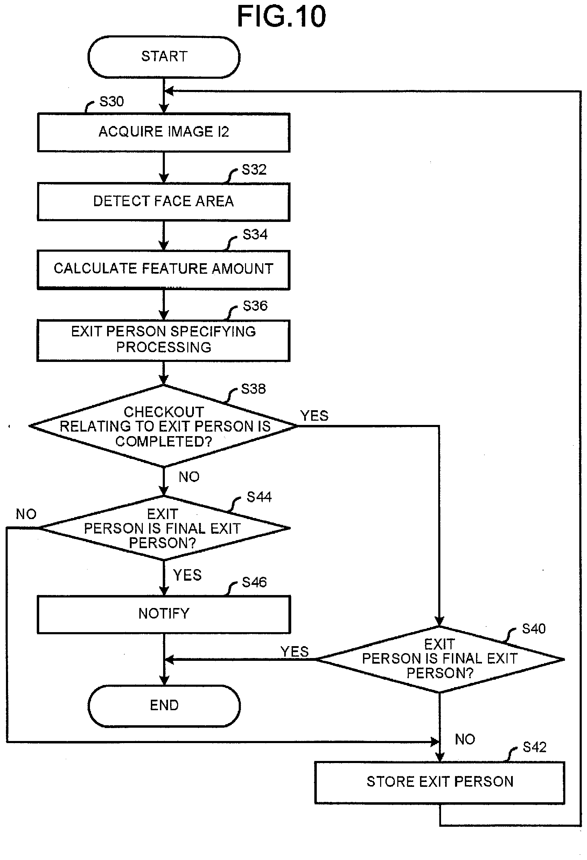

Next, with reference to Fig. 10, a monitoring processing executed by the monitoring server 40 is described. Fig. 10 is a flowchart depicting an example of the flow of the monitoring processing executed by the monitoring server 40 according to the present embodiment. Prior to the processing in Fig. 10, the monitoring server 40 receives data of the face region I1i, the feature data F1ij, the checkout information ID 90, and the additional information 94 from the registration apparatus 10, and receives the checkout information ID 90 and the checkout completion flag 92 from the checkout apparatus 20 to complete creation of the determination table T1 (Fig. 9) described above.

The image acquisition section 410 acquires the second image I2 from the second camera 32 (Act S30).

The feature data calculation section 411 detects the face region I2p from the second image I2 input from the second camera 32 (Act S32).

The feature data calculation section 411 calculates the feature data F2pj (j = 1, 2,..., m) from the face region I2p (Act S34).

The customer specifying section 413 executes the exit person specifying processing, and specifies the customer Kh corresponding to the face region I2p (Act S36). The details of the exit person specifying processing are as described above.

The first determination processing section 414 executes the checkout completion determination processing to determine whether the checkout processing of one transaction relating to the exit person is completed (Act S38) . Details of the checkout completion determination processing are as described above. If it is determined that the checkout processing of one transaction relating to the customer Kh specified by the exit person specifying processing is completed (Yes in Act S38), the flow proceeds to the processing in Act S40. On the other hand, if it is determined that the checkout processing of one transaction relating to the customer Kh specified by the exit person specifying processing is not completed (No in Act S38), the flow proceeds to the processing in Act S44.

If it is determined that the checkout processing of one transaction relating to the customer Kh specified by the exit person specifying processing is completed (Yes in Act S38), the second determination processing section 415 executes the final exit person determination processing to determine whether the customer Kh is the final exit person of the group to which the customer Kh belongs (Act S40) . Details of the final exit person determination processing are as described above. In Act S40, if the customer Kh is the final exit person (Yes in Act S40), the monitoring server 40 ends the monitoring processing in Fig. 10. On the other hand, if the customer Kh is not the final exit person (No in Act S40), the flow proceeds to the processing in Act S42.

If the checkout processing of the one transaction relating to the customer Kh specified by the exit person specifying processing is not completed (No in Act S38), the second determination processing section 415 executes the final exit person determination processing to determine whether the customer Kh is the final exit person of the group to which the customer Kh belongs (Act S44). In Act S44, if the customer Kh is the final exit person (Yes in Act S44), the flow proceeds to the processing in Act S46. On the other hand, if the customer Kh is not the final exit person (No in Act S44), the flow proceeds to the processing in Act S42.

The second determination processing section 415 enables the notifying section 43 to generate the warning sound to notify the unfair exit (Act S46). Thereafter, the monitoring server 40 ends the monitoring processing in Fig. 10.

The second determination processing section 415 stores the customer Kh as the exit person (Act S42). Specifically, the second determination processing section 415 assigns the check mark 96i indicating that the customer Kh exited, to the exit person flag 96 column in the determination table T1. Thereafter, the monitoring server 40 proceeds to the processing in Act S30 and repeats the above-described processing.

As described above, according to the monitoring server 40 which is an example of the information processing apparatus according to the embodiment, based on the similarity degree between the feature data F1ij calculated from the first image I1 including the customer relating to one transaction among the images captured at the registration area A11 positioned at the entrance of the POS area A1 and the feature data F2pj calculated from the second captured image I2 obtained by capturing customers at the exit area A13 which are stored in the storage section 42, the customer specifying section 413 specifies the customer Kh who moves from the registration area A11 to the exit area A13. Then, the first determination processing section 414 determines whether the checkout completion flag 92 is added to the checkout information ID 90 associated with the customer Kh specified by the customer specifying section 413. Further, the second determination processing section 415 determines whether other customers associated with the same checkout information ID 90 as the customer Kh specified by the customer specifying section 413 is already specified by the customer specifying section 413. Then, the second determination processing section 415 enables the notifying section 43 to notify that the checkout of the transaction is not executed on condition that the information indicating the completion of the checkout is not added to the checkout information ID 90 and other customers are already specified by the customer specifying section 413. Therefore, in a case where a plurality of people go shopping for one transaction as a group, the other members of the group except for the customer relating to the checkout processing will not be subjected to the notification by the notifying section 43.

According to the embodiment, the registration apparatus 10 used by the store clerk to register the commodity for one transaction is arranged in the registration area A11, and the checkout apparatus 20 used by the customer relating to the one transaction to execute the checkout of the commodity registered at the registration apparatus 10 is arranged in the accounting area A12. Then, the first image I1 is captured by the first camera 31 so as to include the face of the customer relating to the one transaction in the registration apparatus 10 in the captured image, and the second image I2 is captured by the second camera 32 so as to include the face of the customer in the exit area A13 in the captured image. Therefore, while the registration processing is executed, at the time the customer exits from the exit area A13, it is possible to reliably capture an image including the face of the customer relating to the one transaction.

Furthermore, according to the monitoring server 40 according to the embodiment, the storage section 42 stores the feature data F1ij respectively calculated from a plurality of the face regions I1i of each customer relating to the one transaction which are contained in the first image I1. Therefore, since the plurality of the feature data F1ij is extracted from the captured image and is stored for each customer, it is possible to reliably specify the customer by identifying the customer even if the orientation of the face or the size of the face changes.

Then, according to the monitoring server 40 according to the embodiment, the second determination processing section 415 disables the feature data F1ij of the face region I1i of the customer Kh stored in the storage section 42 on condition that the information indicating the completion of the checkout is not added to the checkout information ID 90 associated with the specified customer Kh, and all the other customers associated with the same identification information as the customer Kh are not specified yet by the customer specifying section 413. Thus, it is possible to narrow the data range used for the comparison of the face region I1i at the time of carrying out the exit person specifying processing from the next time, so that the amount of computation of the customer specifying section 413 can be reduced.

According to the monitoring server 40 according to the embodiment, the second determination processing section 415 disables all the feature data F1ij associated with the checkout information ID 90 stored in the storage section 42 on condition that the information indicating the completion of the checkout is added to the checkout information ID 90 associated with the specified customer Kh. Thus, since it is possible to narrow the data range for the comparison of the face region I1i at the time of carrying out the exit person specifying processing from the next time, the amount of computation of the customer specifying section 413 can be further reduced.

While the embodiment of the present invention has been described, the embodiment has been presented by way of example only, and is not intended to limit the scope of the invention. Indeed, the novel embodiment described herein may be embodied in a variety of other forms; furthermore, various omissions, substitutions and changes in the form of the embodiment described herein may be made without departing from the scope of the invention. The accompanying claims and their equivalents are intended to cover such forms or modifications as would fall within the scope of the invention.

For example, in the above-described embodiment, although it is described that the registration apparatus 10 executes the identification processing of the face region I1i detected from the first image I1, the identification processing may be executed by the monitoring server 40. In other words, the registration apparatus 10 may transmit only the captured first image I1 to the monitoring server 40, and the monitoring server 40 may detect the face region I1i from the received first image I1, calculate the feature data F1ij and execute the identification processing of the face region I1i. Alternatively, the registration apparatus 10 transmits only the face region I1i detected from the captured first image I1 to the monitoring server 40, and the monitoring server 40 may calculate the feature data F1ij from the received face region I1i, and execute the identification processing of the face region I1i.

## Claims

1. A theft detection machine connectable to a register machine and a checkout machine that are located in a point-of-sale (POS) area of a store, said theft detection machine comprising:
a storage device in which feature data of each customer included in a first image captured during a transaction carried out at the register machine, are stored in association with identification information for the transaction;
an audio output device; and
a controller configured to extract feature data from second images that include customers leaving the exit of the POS area of the store, determine whether at least two persons are captured in the first image and whether or not the transaction has been settled at the checkout machine, and upon determining that at least two person are captured in the first image and the transaction has not been settled at the checkout machine, compare the feature data of each customer included in the first image and the feature data extracted from the second images and control the audio output device to sound an alert based on a result of the comparison.

2. The theft detection machine according to claim 1, wherein the audio output device is installed near an exit of the POS area of the store.

3. The theft detection machine according to claim 1, wherein the controller is configured to control the audio output device to sound the alert in response to determining that at least two person are captured in the first image, the transaction has not been settled at the checkout machine, and the result of the comparison indicate that each customer included in the first image is also included the second images.

4. The theft detection machine according to claim 3, wherein the controller is configured to control the audio output device to not sound the alert in response to determining that at least two person are captured in the first image, the transaction has not been settled at the checkout machine, and the result of the comparison indicate that at least one customer included in the first image is not also included the second images.

5. The theft detection machine according to any one of claims 1 to 4, wherein the feature data of each customer included in the first image are extracted from a plurality of regions in the first image that are identified as face regions.

6. A theft detection system comprising:
the theft detection machine according to any one of claims 1 to 5, which is connected to the register machine and the checkout machine

7. The theft detection system according to claim 6, further comprising:
a first camera positioned to capture an image of a customer side of the registration apparatus; and
a second camera positioned to face the exit of the POS area of the store.

8. The theft detection system according to claims 6 or 7, wherein
the register machine is used to register one or more commodities for inclusion in the transaction, and
the checkout apparatus is used by the customer to pay for the transaction.

9. A method of preventing theft at a store that has first and second cameras installed in a point-of-sale (POS) area of the store that includes a register machine and a checkout machine, the method comprising steps of:
capturing with the first camera a first image of customers in front of a register machine during a transaction carried out by the register machine;
extracting feature data from the first image and storing the feature data in association with identification information for the transaction;
capturing second images of customers as the customers are exiting the POS are of the store;
extracting feature data from the second images;
determining whether at least two persons are captured in the first image and whether or not the transaction has been settled at the checkout machine;
upon determining that at least two person are captured in the first image and the transaction has not been settled at the checkout machine, comparing the feature data of each customer included in the first image and the feature data extracted from the second images; and
controlling an audio output device installed near the exit of the POS area of the store to sound an alert based on a result of the comparison.

10. The method according to claim 9, further comprising step of: controlling the audio output device to sound the alert in response to determining that at least two person are captured in the first image, the transaction has not been settled at the checkout machine, and the result of the comparison indicate that each customer included in the first image is also included the second images.

11. The method according to claim 9, further comprising step of: controlling the audio output device not to sound the alert in response to determining that at least two person are captured in the first image, the transaction has not been settled at the checkout machine, and the result of the comparison indicate that at least one customer included in the first image is not also included the second images.

12. The method according to any one of claims 9 to 11, wherein the feature data of each customer included in the first image are extracted from a plurality of regions in the first image that are identified as face regions.
